# EUROPÄISCHE PATENTSCHRIFT

(11) **EP 1 474 655 B1**
(45) Veröffentlichungstag und Bekanntmachung des Hinweises auf die Patenterteilung: **27.07.2011**
(21) Anmeldenummer: 02782715.3
(22) Anmeldetag: 11.10.2002
(51) Int. Cl.: G01B 21/00, G01B 3/12

(54) **ORTUNGSGERÄT**
LOCATING DEVICE
DISPOSITIF DE REPERAGE

(30) Priorität: 07.02.2002 DE 10205000
(43) Veröffentlichungstag der Anmeldung: 10.11.2004
(73) Patentinhaber: ROBERT BOSCH GMBH, 70442 Stuttgart (DE)
(72) Erfinder: HOFFMANN, Erhard, 70771 Leinfelden (DE); CLAUSS, Stefan, 70771 Leinfelden-Echterdingen (DE); SKULTETY-BETZ, Uwe, 70771 Leinfelden-Echterdingen (DE); HAASE, Bjoern, 70182 Stuttgart (DE); HOFFMANN, Ulli, 75223 Nieffern-Öschelbronn (DE)
(86) Internationale Anmeldenummer: PCT/DE2002/003873
(87) Internationale Veröffentlichungsnummer: WO 2003/067189

(56) Entgegenhaltungen:
- WO-A-89/01604
- DE-A- 1 448 369
- DE-A1- 4 103 216

## Beschreibung

### Stand der Technik

Die Erfindung geht aus von einem Ortungsgerät nach dem Oberbegriff des Anspruchs 1.

Es ist ein handgeführtes Ortungsgerät bekannt, das ein Fahrwerk mit vier Rädern aufweist, wobei jeweils zwei Räder an einer Längsseite des Ortungsgeräts angebracht sind. Die sich gegenüberliegenden Räder sind jeweils über eine sich senkrecht zur Längserstreckung des Ortungsgeräts verlaufende Achse verbunden. Das Ortungsgerät besitzt an einer Oberseite seines Gehäuses ein Display und eine sich in Richtung der Längserstreckung verlaufende Halteeinheit, mit der das Ortungsgerät mit Laufflächen der Räder auf einer Fläche eines Untersuchungsgegenstands in Richtung seiner Längserstreckung verfahrbar ist.

Zur Aufnahme einer Bewegungskenngröße mittels einer Sensoreinheit sind die beiden starren Achsen und die Sensoreinheit über einen Zahnriemen mechanisch gekoppelt.

Ein ähnliches Ortungsgerät mit einem Gehäuse, einem Fahrwerk und mit einer Anzeigeeinheit ist aus DE 4 103 216 A1 bekannt.

### Vorteile der Erfindung

Die Erfindung ist gerichtet auf ein Ortungsgerät mit einem Gehäuse, einem Fahrwerk und mit einer Anzeigeeinheit, insbesondere einem Display zur grafischen Darstellung von Meßinformationen, das zur Ortung mit einer Halteeinheit über eine Fläche eines Untersuchungsgegenstands bewegbar ist, und mit zumindest einer Sensoreinheit zur Aufnahme einer ersten Bewegungskenngröße, wobei am Gehäuse das Fahrwerk mit zumindest einem Wälzkörper und zumindest einer Achse angeordnet ist und die Achse parallel zur Längserstreckung des Gehäuses verläuft, wodurch wenigstens eine Bewegungsmeßrichtung quer zur Längserstreckung des Gehäuses verläuft und im ehäuse, in Längserstreckung des Gehäuses in einem Endbereich wenigstens eine Messeinheit zur Ortung von Objekten angeordnet ist dadurch gekennzeichnet, dass die Achse in die Messeinheit geführt ist.

Das Ortungsgerät bzw. das Gehäuse kann mit der Meßeinheit zur Ortung von Objekten weit in eine Ecke verfahren, und es kann bis weit in die Ecke gemessen werden. Ist das Ortungsgerät während eines Meßvorgangs bzw. eines Ortungsvorgangs in zwei entgegengesetzte Richtungen bewegbar, kann das Ortungsgerät besonders vorteilhaft in zwei gegenüberliegende Ecken verfahren werden, wobei ein Wenden des Ortungsgeräts vermeidbar ist. Dabei ist insbesondere vorteilhaft eine Meßeinheit zur Ortung von Objekten im wesentlichen symmetrisch zu einer Ebene ausgebildet bzw. angeordnet, die von einer Mittelachse des Ortungsgeräts und von einer Normalen einer Deckseite des Ortungsgeräts aufgespannt ist. Es ist eine vorteilhafte Eckengängigkeit erzielbar.

Da im Gehäuse in Längserstreckung des Gehäuses in einem Endbereich wenigstens eine Meßeinheit angeordnet ist, kann das Gehäuse mit seiner Meßeinheit vorteilhaft nahe entlang einer Ecke verfahren werden.

In einer weiteren Ausgestaltung der Erfindung wird vorgeschlagen, daß eine Quererstreckung des Gehäuses im wesentlichen durch eine Breite der Meßeinheit bestimmt ist. Es ist dadurch ein besonders schmal bauendes und somit eckengängiges Ortungsgerät erreichbar, und zwar insbesondere kann ein Ortungsgerät mit einer vorteilhaften maximalen Quererstreckung kleiner als 12 cm erreicht werden.

Ferner ist am Gehäuse ein Fahrwerk mit zumindest einem Wälzkörper angeordnet, dessen Achse in die Meßeinheit geführt ist. Der Bauraum innerhalb der Meßeinheit kann vorteilhaft genutzt und zusätzlicher Bauraum kann vermieden werden, und zwar insbesondere Bauraum in Quererstreckung vor und nach der Meßeinheit.

Ist die Achse zudem durch die Meßeinheit geführt und weist das Fahrwerk zumindest zwei über die Achse miteinander drehfest verbundene Wälzkörper auf, kann ein Geradeauslauf mit einer hohen Spurstabilität erreicht werden, und zwar insbesondere, wenn die Wälzkörper an gegenüberliegenden Stirnseiten des Gehäuses angeordnet sind.

Ist an einer Unterseite des Gehäuses zumindest ein Vorsprung zum Schutz wenigstens eines Wälzkörpers angeordnet, kann beim Bewegen des Gehäuses über eine Kante ein Verhaken und/oder ein Beschädigen des Wälzkörpers vorteilhaft vermieden werden. Ferner kann der Wälzkörper und/oder die Achsen bei einem Sturz des Ortungsgeräts durch den Vorsprung entlastet werden, indem der Vorsprung beim Auftreffen des Ortungsgeräts auf einem Untergrund mit diesem in Anlage kommt, bevor eine plastische Verformung der Achse und/oder des Wälzkörpers eintreten kann.

Ferner wird vorgeschlagen, daß zumindest zwei Bedienelemente am Gehäuse in Längserstreckung des Gehäuses vor und/oder nach einer Haltefläche der Halteeinheit angeordnet sind. Vorteilhaft kann ein zusätzlicher Bauraum für seitlich angeordnete Bedienelemente vermieden werden.

Besonders vorteilhaft sind die Bedienelemente innerhalb eines in Längserstreckung weisenden vorderen Bereichs mit einem Radius von 60.mm zu einem vorderen Ende der Halteeinheit angeordnet. Es ist eine Einhandbedienung erreichbar, bei der sämtliche, für einen Meßvorgang erforderliche Bedienelemente bedienbar sind. Sind die Bedienelemente in einem Bereich kleiner als 25 mm angeordnet, können diese besonders komfortabel vom Bediener betätigt werden.

Ferner wird vorgeschlagen, daß die Halteeinheit zu einer Ebene symmetrisch ausgebildet ist, die von einer Längsmittelachse und von einer Normalen einer Deckseite des Ortungsgeräts aufgespannt ist. Vorteilhaft kann das Ortungsgerät über die Halteeinheit von Rechts- und von Linkshändern bzw. mit einer rechten oder mit einer linken Hand komfortabel gegriffen und verfahren werden. Ist die Halteeinheit mit einem Winkel zu einer in Längserstreckung verlaufenden Mittelachse des Gehäuses angebracht, kann der Komfort für bestimmte Zielgruppen gesteigert werden, und ist die Halteeinheit um eine durch die Mittelachse verlaufende senkrechte Achse schwenkbar gelagert, kann der Komfort für sämtliche Zielgruppen gesteigert werden. Vorteilhaft weist die Halteeinheit eine sich in Richtung einer Deckseite des Gehäuses verjüngende, insbesondere diamantförmige Querschnittsfläche auf. Es ist eine vorteilhaft ergonomisch geformte Halteeinheit erreichbar, über die der Bediener das Ortungsgerät ermüdungsarm über die Fläche des Untersuchungsgegenstands bewegen kann.

In einer weiteren Ausgestaltung der Erfindung wird vorgeschlagen, daß mit der Sensoreinheit neben der ersten Bewegungskenngröße zumindest eine zweite Bewegungskenngröße erfaßbar ist.

Vorteilhaft können zusätzliche Informationen erfaßt werden, wie z.B. Informationen über einen Abstand des Gehäuses zur Fläche des Untersuchungsgegenstands und/oder Informationen über eine Bewegung des Gehäuses auf einer Kurvenbahn usw. Meßergebnisse können mit den zusätzlichen Informationen korrigiert und Meßfehler können vorteilhaft zumindest reduziert werden. Ferner können Meßfehler, insbesondere die durch eine unbeabsichtigte Änderung einer Bewegungsmeßrichtung entstehende Fehler, über eine Anzeige angezeigt und manuell und/oder automatisch über Aktuatoren korrigiert werden. Zudem kann bei einem Ausfall der Sensoreinheit hinsichtlich der Erfassung der ersten Bewegungskenngröße mit der zweiten Bewegungskenngröße ein zumindest teilweise verwertbares Meßergebnis erreicht werden, und zwar insbesondere, wenn die zweite Bewegungskenngröße der ersten Bewegungskenngröße von der Art her entspricht.

Ist aus den erfaßten Bewegungskenngrößen eine Kenngröße für eine Drehbewegung des Gehäuses um zumindest eine Achse ermittelbar, kann einfach auf eine ungewünschte Bewegung des Gehäuses geschlossen werden, und zwar insbesondere, wenn sich die Achse in Richtung der Normalen der Fläche des Untersuchungsgegenstands erstreckt.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: ein Ortungsgerät in einer Draufsicht,
- Fig. 2: einen Schnitt entlang der Linie II-II in Fig. 1 und
- Fig. 3: einen Ausschnitt einer Unterseite des Ortungs- geräts aus Fig. 1.

### Beschreibung des Ausführungsbeispiels

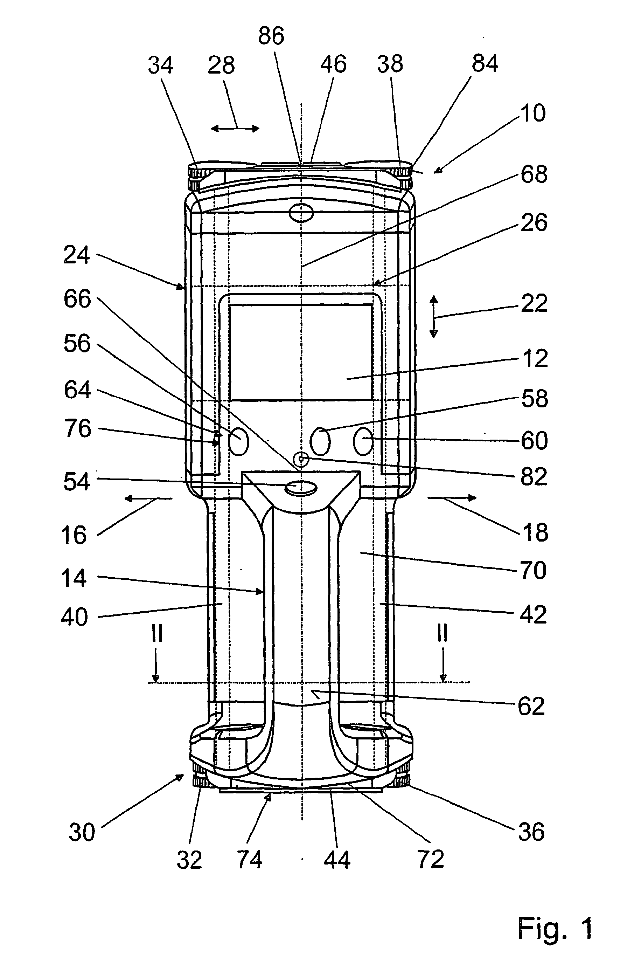

Fig. 1 zeigt ein angeführtes Ortungsgerät mit einem Gehäuse 10 und einem Fahrwerk 30. Das Gehäuse 10 des Ortungsgeräts ist in zwei bevorzugte, entgegengesetzte Bewegungsmeßrichtungen 16, 18 verfahrbar, die senkrecht zu einer Längserstrekkung 22 des Gehäuses 10 verlaufen. Das Gehäuse 10 weist an seiner Deckseite 70 eine von einem bügelförmigen Griff gebildete Halteeinheit 14 mit einer Haltefläche 62 auf. Die Halteeinheit 14 verläuft in Längserstreckung 22 des Gehäuses 10 und ist symmetrisch zu einer Ebene ausgebildet, die von einer Längsmittelachse 68 und von einer Normalen 82 der Deckseite 70 des Ortungsgeräts aufgespannt ist (Fig. 1).

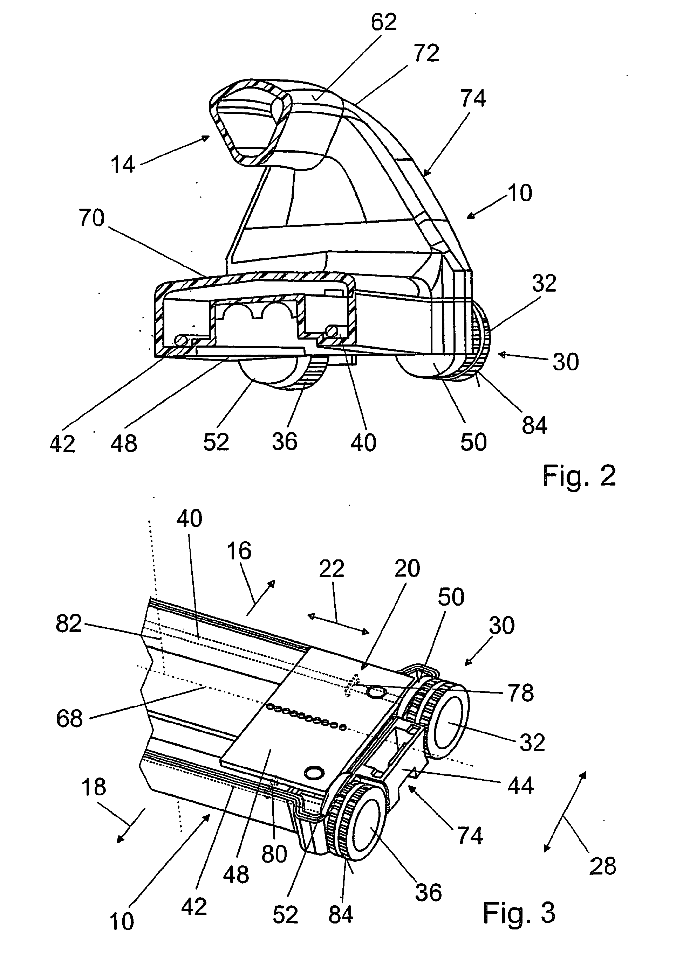

Die Halteeinheit 14 weist eine sich in Richtung der Deckseite 70 verjüngende, diamantförmige Querschnittsfläche auf und geht mit seinem ersten Ende 72, das in Längserstreckung 22 des Gehäuses 10 zu einem Endbereich 74 des Gehäuses 10 weist, in das Gehäuse 10 über, während die Halteeinheit 14 mit seinem zweiten Ende 66 an der Deckseite 70 des Gehäuses 10 mündet (Fig. 1 und 2).

An seinem zweiten Ende 66 weist die Halteeinheit 14 in Längserstreckung 22 in Richtung eines LCD-Bildschirms 12 nach der Haltefläche 62 ein erstes Bedienelement 54 auf (Fig. 1). Nach der Halteeinheit 14 ist in Längserstreckung 22 des Gehäuses 10 in Richtung des LCD-Bildschirms 12, der von einem Farbbildschirm gebildet ist, jedoch auch von einem monochromatischen Bildschirm gebildet sein kann, ein Bedienfeld 76 mit drei Bedienelementen 56, 58, 60 angeordnet, wobei die Bedienelemente 56, 58, 60 in einem Bereich 64 mit einem Radius von ca. 25 mm zum Ende 66 der Halteeinheit 14 angeordnet sind. Ein Bediener kann mit einer Hand das Ortungsgerät über die Halteeinheit 14 führen und gleichzeitig die Bedienelemente 54, 56, 58 und 60 mit seinem Daumen bedienen.

Die Halteeinheit 14 ragt über die Deckseite 70 des Ortungsgeräts und bildet einen Überrollbügel zum Schutz des LCD-Bildschirms 12. Das Ortungsgerät besitzt in Längserstreckung 22 des Gehäuses 10 in einem Endbereich 24, unterhalb des LCD-Bildschirms 12 eine Meßeinheit 26, wobei eine Quererstreckung 28 des Gehäuses 10 im wesentlichen einer Breite der Meßeinheit 26 entspricht, und zwar ca. 100 mm (Fig. 1). Die Meßeinheit 26 ist symmetrisch zu einer Ebene ausgebildet, die von der Längsmittelachse 68 und von der Normalen 82 der Deckseite 72 des Ortungsgeräts aufgespannt ist.

Das Ortungsgerät besitzt vier als Räder ausgebildete Wälzkörper 32, 34, 36, 38, die in Längserstreckung 22 an gegenüberliegenden Stirnseiten 44, 46 in Quererstreckung 28 im äußeren Bereich angeordnet sind (Fig. 1). Denkbar ist auch, das Ortungsgerät nur mit drei Wälzkörpern auszustatten, wobei an einer Stirnseite zwei Wälzkörper und an einer gegenüberliegenden Stirnseite ein einzelner Wälzkörper angeordnet sein können. Die sich jeweils in Längserstreckung 22 gegenüberliegenden Wälzkörper 32, 34, 36, 38 sind über starre Achsen 40, 42 drehfest miteinander verbunden, wobei die starren Achsen 40, 42 durch die Meßeinheit 26 geführt sind.

An einer Unterseite 48 des Gehäuses 10 sind zum Schutz der Wälzkörper 32, 34, 36, 38 Vorsprünge 50, 52 angeformt, die im wesentlichen die Form eines scheibenförmigen Kreissegments aufweisen (Fig. 2 und 3).

Zur Aufnahme von Bewegungskenngrößen weist das Ortungsgerät eine Sensoreinheit 20 mit zwei Sensoren 78, 80 auf, mit denen eine erste und eine zweite Bewegungskenngröße erfaßbar sind (Fig. 3). Die Sensoren 78, 80 der Sensoreinheit 20 sind von optoelektronischen Bauteilen gebildet, und zwar von Gabellichtschranken. Zum Erfassen der Bewegungskenngrößen ist jeweils ein Sensor 78, 80 mit einer Achse 40, 42 des Fahrwerks 30 gekoppelt, so daß die erste Bewegungskenngröße über die erste Achse 40 und die zweite Bewegungskenngröße über die zweite Achse 42 erfaßt werden kann. Die beiden Achsen 40, 42 sind über die Sensoren 78, 80 der Sensoreinheit 20 elektronisch gekoppelt.

Auf die Achsen 40, 42 sind nicht näher dargestellte Segmenträder aufgesteckt, die sich durch die die Sensoren 78, 80 bildenden Gabellichtschranken bewegen. Weisen die Sensoren 78,-80 pro Segmentrad jeweils zwei Lichtschranken mit einem geeigneten Versatz zueinander auf, kann vorteilhaft über eine Phasenlage der beiden Ausgangssignale mit der Sensoreinheit 20 die Bewegungsmeßrichtung 16, 18 des Ortungsgeräts bestimmt werden.

Bewegt ein Bediener das Gehäuse 10 über die Fläche eines Untersuchungsgegenstands, wälzen sich die Wälzkörper 32, 34, 36, 38 des Fahrwerks 30 mit ihren Flächen 84 auf der Fläche des Untersuchungsgegenstands ab. Mit den Wälzkörpern 32, 34, 36, 38 werden die Achsen 40, 42 und mit den Achsen 40, 42 die Segmenträder gedreht.

Die von den Sensoren 78, 80 erfaßten Bewegungskenngrößen bzw. die Drehzahlen der Achsen 40, 42 werden in einer nicht näher dargestellten Auswerteeinheit verglichen, so daß aus den Bewegungskenngrößen auf eine Kenngröße für eine Drehbewegung des Gehäuses 10 um eine Achse 82 geschlossen werden kann, die sich in Richtung der Normalen der Fläche des Untersuchungsgegenstands erstreckt und zudem die Normale der Deckseite 70 des Ortungsgeräts bildet.

Wird beim Bewegen des Ortungsgeräts über einen Untersuchungsgegenstand ein Objekt im LCD-Bildschirm 12 angezeigt, gibt eine Kerbe 86, die an einer Stirnseite 46 des Gehäuses 10 ausgebildet ist, die Position des Objekts im Untersuchungsgegenstand relativ zum Gehäuse 10 an.

### Bezugszeichen

- 10: Gehäuse
- 12: Anzeigeeinheit
- 14: Halteeinheit
- 16: Bewegungsmeßrichtung
- 18: Bewegungsmeßrichtung
- 20: Sensoreinheit
- 22: Längserstreckung
- 24: Endbereich
- 26: Meßeinheit
- 28: Quererstreckung
- 30: Fahrwerk
- 32: Wälzkörper
- 34: Wälzkörper
- 36: Wälzkörper
- 38: Wälzkörper
- 40: Achse
- 42: Achse
- 44: Stirnseite
- 46: Stirnseite
- 48: Unterseite
- 50: Vorsprung
- 52: Vorsprung
- 54: Bedienelement

- 56: Bedienelement
- 58: Bedienelement
- 60: Bedienelement
- 62: Haltefläche
- 64: Bereich
- 66: Ende
- 68: Längsmittelachse
- 70: Deckseite
- 72: Ende
- 74: Endbereich
- 76: Bedienfeld
- 78: Sensor
- 80: Sensor
- 82: Achse
- 84: Fläche
- 86: Kerbe

## Patentansprüche

1. Ortungsgerät mit einem Gehäuse (10), einem Fahrwerk (30) und mit einer Anzeigeeinheit (12), insbesondere einem Display zur grafischen Darstellung von Meßinformationen, das zur Ortung mit einer Halteeinheit (14) über eine Fläche eines Untersuchungsgegenstands bewegbar ist, und mit zumindest einer Sensoreinheit (20) zur Aufnahme einer ersten Bewegungskenngröbe, wobei am Gehäuse (10) das Fahrwerk (30) mit zumindest einem Wälzkörper (32, 34, 36, 38) und zumindest einer Achse (40) angeordnet ist und die Achse (40) parallel zur Längserstreckung (22) des Gehäuses (10) verläuft, wodurch wenigstens eine Bewegungsmeßrichtung (16, 18) quer zur Längserstreckung (22) des Gehäuses (10) verläuft und im Gehäuse (10), in Längserstreckung (22) des Gehäuses (10) in einem Endbereich (24) wenigstens eine Messeinheit (26) zur Ortung von Objekten angeordnet ist, **dadurch gekennzeichnet, dass** die Achse (40, 42) in die Messeinheit (26) geführt ist.

2. Ortungsgerät nach Anspruch 1, **dadurch gekennzeichnet, daß** eine Meßeinheit (26) zur Ortung von Objekten im wesentlichen symmetrisch zu einer Ebene ausgebildet ist, die von einer Längsmittelachse (68) und von einer Normalen (82) einer Deckseite (72) aufgespannt ist.

3. Ortungsgerät nach Anspruch 1 oder 2, **dadurch gekennzeichnet, daß** eine Quererstreckung (28) des Gehäuses (10) im wesentlichen durch eine Breite der Meßeinheit (26) bestimmt ist.

4. Ortungsgerät nach Anspruch 3, **dadurch gekennzeichnet, daß** die maximale Quererstreckung (28) des Gehäuses (10) kleiner als 12 cm ist.

5. Ortungsgerät nach einem der vorhergehenden Ansprüche, **dadurch gekennzeichnet, daß** die Achse (40, 42) durch die Meßeinheit (26) geführt ist und das Fahrwerk (30) zumindest zwei über die Achse (40, 42) miteinander drehfest verbundene Wälzkörper (32, 34, 36, 38) aufweist.

6. Ortungsgerät nach Anspruch 5, **dadurch gekennzeichnet, daß** die Wälzkörper (32, 34, 36, 38) an gegenüberliegenden Stirnseiten (44, 46) des Gehäuses (10) angeordnet sind.

7. Ortungsgerät nach einem der vorhergehenden Ansprüche, **dadurch gekennzeichnet, daß** an einer Unterseite (48) des Gehäuses (10) zumindest ein Vorsprung (50, 52) zum Schutz wenigstens eines Wälzkörpers (32, 34, 36, 38) angeordnet ist.

8. Ortungsgerät nach einem der vorhergehenden Ansprüche, **dadurch gekennzeichnet, daß** zumindest zwei Bedienelemente (54, 56, 58, 60) am Gehäuse (10) in Längserstreckung (22) des Gehäuses (10) vor und/oder nach einer Haltefläche (62) der Halteeinheit (14) angeordnet sind.

9. Ortungsgerät nach Anspruch 8, **dadurch gekennzeichnet, daß** die Bedienelemente (54, 56, 58, 60) innerhalb eines in Längserstreckung (22) des Gehäuses (10) vorderen Bereichs (64) mit einem Radius von 60 mm zu einem vorderen Ende (66) der Halteeinheit (14) angeordnet sind.

10. Ortungsgerät nach einem der vorhergehenden Ansprüche, **dadurch gekennzeichnet, daß** die Halteeinheit (14) zu einer Ebene symmetrisch ausgebildet ist, die von einer Längsmittelachse (68) und von einer Normalen (82) einer Deckseite (70) aufgespannt ist.

11. Ortungsgerät nach einem der vorhergehenden Ansprüche, **dadurch gekennzeichnet, daß** die Halteeinheit (14) eine sich in Richtung einer Deckseite (70) des Gehäuses (10) verjüngende Querschnittsfläche aufweist.

12. Ortungsgerät nach einem der vorhergehenden Ansprüche, **dadurch gekennzeichnet, daß** mit der Sensoreinheit (20) neben der ersten Bewegungskenngröße zumindest eine zweite Bewegungskenngröße erfaßbar ist.

13. Ortungsgerät nach Anspruch 12, **dadurch gekennzeichnet, daß** aus den erfaßten Bewegungskenngrößen eine Kenngröße für eine Drehbewegung des Gehäuses (10) um zumindest eine Achse (82) ermittelbar ist.

## Claims

1. Position-finding device having a housing (10), a running gear (30), and having a display unit (12), in particular a display which has the purpose of displaying measurement information in graphic form and which, for the purpose of finding positions, can be moved with a holding unit (14) over a surface of an object to be examined, and having at least one sensor unit (20) for registering a first movement characteristic variable, wherein the running gear (30) is arranged with at least one rolling body (32, 34, 36, 38) and at least one axle (40) on the housing (10), and the axle (40) runs parallel to the longitudinal extent (22) of the housing (10), as a result of which at least one movement-measuring direction (16, 18) runs transversely to the longitudinal extent (22) of the housing (10), and, in the housing (10), in an end region (24) in the longitudinal extent (22) of the housing (10), at least one measuring unit (26) for finding the positions of objects is arranged, **characterized in that** the axle (40, 42) is made to extend into the measuring unit (26).

2. Position-finding device according to Claim 1, **characterized in that** a measuring unit (26) is designed to find the positions of objects essentially symmetrically with respect to a plane which is spanned by a longitudinal centre axis (68) and by a perpendicular (82) to a cover side (70).

3. Position-finding device according to Claim 1 or 2, **characterized in that** a transverse extent (28) of the housing (10) is determined essentially by a width of the measuring unit (26).

4. Position-finding device according to Claim 3, **characterized in that** the maximum transverse extent (28) of the housing (10) is less than 12 cm.

5. Position-finding device according to one of the preceding claims, **characterized in that** the axle (40, 42) is made to extend through the measuring unit (26), and the running gear (30) has at least two rolling bodies (32, 34, 36, 38) which are connected to one another in a rotationally fixed fashion by means of the axle (40, 42).

6. Position-finding device according to Claim 5, **characterized in that** the rolling bodies (32, 34, 36, 38) are arranged on opposite end sides (44, 46) of the housing (10).

7. Position-finding device according to one of the preceding claims, **characterized in that** at least one projection (50, 52) for protecting at least one rolling body (32, 34, 36, 38) is arranged on an underside (48) of the housing (10).

8. Position-finding device according to one of the preceding claims, **characterized in that** at least two operator controls (54, 56, 58, 60) are arranged on the housing (10) before and/or after a holding face (62) of the holding unit (14) in the longitudinal extent (22) of the housing (10).

9. Position-finding device according to Claim 8, **characterized in that** the operator controls (54, 56, 58, 60) are arranged within a region (64) which is at the front in the longitudinal extent (22) of the housing (10) and has a radius of 60 mm with respect to a front end (66) of the holding unit (14).

10. Position-finding device according to one of the preceding claims, **characterized in that** the holding unit (14) is of symmetrical design with respect to a plane which is spanned by a longitudinal centre axis (68) and by a perpendicular (82) to a cover side (70).

11. Position-finding device according to one of the preceding claims, **characterized in that** the holding unit (14) has a cross-sectional face which tapers in the direction of a cover side (70) of the housing (10).

12. Position-finding device according to one of the preceding claims, **characterized in that**, in addition to the first movement characteristic variable, at least a second movement characteristic variable can be sensed with the sensor unit (20).

13. Position-finding device according to Claim 12, **characterized in that** a characteristic variable for a rotational movement of the housing (10) about at least one axis (82) can be determined from the sensed movement characteristic variables.

## Revendications

1. Dispositif de repérage doté d'un boîtier (10), d'un châssis (30) et d'une unité d'affichage (12), notamment d'un écran de représentation graphique d'informations de mesure pouvant être déplacé, pour effectuer un repérage, avec une unité d'arrêt (14), au-dessus de la surface d'un objet à examiner, et avec au moins une unité de détection (20) pour détecter une première grandeur caractéristique de mouvement, le châssis (30) étant pourvu au niveau du boîtier (10) d'au moins un corps cylindrique (32, 34, 36, 38) et d'au moins un essieu (40) et l'essieu (40) s'étendant parallèlement à l'extension longitudinale (22) du boîtier (10), permettant qu'au moins une direction de mesure du mouvement (16, 18) s'étende transversalement par rapport à l'extension longitudinale (22) du boîtier (10) et qu'au moins une unité de mesure (26) soit disposée dans le boîtier (10), dans l'extension longitudinale (22) du boîtier (10), dans une zone d'extrémité (24), pour repérer des objets, **caractérisé en ce que** l'essieu (40, 42) est introduit dans l'unité de mesure (26).

2. Dispositif de repérage selon la revendication 1, **caractérisé en ce qu'**une unité de mesure (26) destinée au repérage d'objets est réalisée pour l'essentiel symétriquement par rapport à un plan délimité par un essieu central longitudinal (68) et par une normale (82) à un côté de recouvrement (70).

3. Dispositif de repérage selon la revendication 1 ou 2, **caractérisé en ce qu'**une extension transversale (28) du boîtier (10) est définie pour l'essentiel par une largeur de l'unité de mesure (26).

4. Dispositif de repérage selon la revendication 3, **caractérisé en ce que** l'extension transversale (28) maximale du boîtier (10) est inférieure à 12 cm.

5. Dispositif de repérage selon l'une quelconque des revendications précédentes, **caractérisé en ce que** l'essieu (40, 42) est introduit à travers l'unité de mesure (26) et **en ce que** le châssis (30) comporte au moins deux corps cylindriques (32, 34, 36, 38) reliés entre eux fixement sans rotation par le biais de l'essieu (40, 42).

6. Dispositif de repérage selon la revendication 5, **caractérisé en ce que** les corps cylindriques (32, 34, 36, 38) sont disposés au niveau des faces frontales (44, 46) opposées du boîtier (10).

7. Dispositif de repérage selon l'une quelconque des revendications précédentes, **caractérisé en ce qu'**au moins une saillie (50, 52) est disposée au niveau d'un côté inférieur (48) du boîtier (10) pour protéger au moins un corps cylindrique (32, 34, 36, 38).

8. Dispositif de repérage selon l'une quelconque des revendications précédentes, **caractérisé en ce qu'**au moins deux éléments de commande (54, 56, 58, 60) sont disposés au niveau du boîtier (10) dans l'extension longitudinale (22) du boîtier (10) avant et/ou après une surface d'arrêt (62) de l'unité d'arrêt (14).

9. Dispositif de repérage selon la revendication 8, **caractérisé en ce que** les éléments de commande (54, 56, 58, 60) sont disposés à l'intérieur d'une zone avant (64) dans l'extension longitudinale (22) du boîtier (10), avec un rayon de 60 mm par rapport à une extrémité avant (66) de l'unité d'arrêt (14).

10. Dispositif de repérage selon l'une quelconque des revendications précédentes, **caractérisé en ce que** l'unité d'arrêt (14) est réalisée de façon symétrique par rapport à un plan délimité par un essieu central longitudinal (68) et par une normale (82) à un côté de recouvrement (70).

11. Dispositif de repérage selon l'une quelconque des revendications précédentes, **caractérisé en ce que** l'unité d'arrêt (14) comporte une surface en section transversale se rétrécissant en direction d'un côté de recouvrement (70) du boîtier (10).

12. Dispositif de repérage selon l'une quelconque des revendications précédentes, **caractérisé en ce qu'**au moins une deuxième grandeur caractéristique de mouvement peut être détectée à l'aide de l'unité de détection (20) en plus de la première grandeur caractéristique de mouvement.

13. Dispositif de repérage selon la revendication 12, **caractérisé en ce qu'**une grandeur caractéristique d'un mouvement de rotation du boîtier (10) autour d'au moins un essieu (82) peut être calculée à partir des grandeurs caractéristiques de mouvement détectées.
